# EUROPÄISCHE PATENTANMELDUNG

(11) **EP 1 213 638 A1**
(43) Veröffentlichungstag der Anmeldung: **12.06.2002**
(21) Anmeldenummer: 00126804.4
(22) Anmeldetag: 06.12.2000
(51) Int. Cl.: G06F 1/00

(54) **Freigabe von Geräten**

(71) Anmelder: SIEMENS AKTIENGESELLSCHAFT, 80333 München (DE)
(72) Erfinder: Mletzko, Falk, 34127 Kassel (DE); Schacht, Manfred, 80335 München (DE); Stiegel, Susanne, 86343 Königsbrunn (DE)

(57) **Zusammenfassung**

Die Erfindung betrifft ein Verfahren zur Freigabe von Endgeräten der Datenverarbeitungstechnik und/oder der Kommunikationstechnik, die miteinander in Verbindung treten können, bei dem an einem Endgerät eine Freigabeaktion durchgeführt wird, und bei dem danach an mindestens ein weiteres Endgeräte eine Freigabemeldung gegeben wird.

## Beschreibung

### Freigabe von Geräten

Die Erfindung betrifft ein Verfahren zur Freigabe von Geräten die miteinander in Verbindung treten können.

Unter einem solchen Verfahren zur Freigabe ist die Authentifikation eines Benutzers gegenüber einem Gerät zu verstehen. Die Authentifikation kann durch Eingabe einer persönlichen Identifizierungsnummer (PIN), allgemein von alphanumerischen Zeichen, oder auch durch Eingabe eines Fingerabdrucks über einen sogenannten Fingerprintsensor erfolgen. Die Authentifikation kann auch durch andere biometrische Muster erfolgen, beispielsweise Stimme oder Iris.

Unter Geräten sind stationäre oder mobile Endgeräte der Datenverarbeitungstechnik, wie beispielsweise PCs, Notebooks oder Palmtops beziehungsweise PDA's (Personal Digital Assisstant), und stationäre oder mobile Endgeräte der Kommunikationstechnik zu verstehen. Viele Personen benutzen sowohl ein Mobilfunkgerät, ein sogenanntes Handy, und einen PDA Beide Geräte sind jeweils durch ein eigenes Passwort gesichert und müssen einzeln durch die Eingabe des entsprechenden Passwortes oder biometrischen Musters entsperrt werden.

Der Erfindung liegt die Aufgabe zugrunde, ein komfortables Verfahren zur Freigabe von mehreren Geräten anzugeben.

Diese Aufgabe wird erfindungsgemäß durch die im Patentanspruch 1 angegebenen Merkmale gelöst.

Die Erfindung geht beispielsweise aus von zwei Geräten, einem Mobilfunkgerät und einem Palmtop. Beide Geräte können für einen Datenaustausch über eine Infrarot-Schnittstelle miteinander in Verbindung treten.

Die Datenkommunikation zwischen solchen Geräten kann über Infrarot, Bluetooth, eine HF-Verbindung oder auch über ein Kabel erfolgen.

Zur Durchführung des erfindungsgemäßen Verfahrens wird an einem der Geräte, beispielsweise dem Mobilfunkgerät, eine entsprechende Freigabeaktion durchgeführt. Hierzu wird beispielsweise die üblicherweise vorgesehene vierstellige Kennziffer über die Tastatur eingegeben. Wie einleitend schon ausgeführt, kann stattdessen auch die Eingabe des Fingerabdrucks durchgeführt werden. Weiter ist auch im Rahmen einer weiteren Biometrieerkennung die Auswertung der Stimme des Benutzers denkbar.

Über die drahtlose oder drahtgebundene Kommunikationsverbindung wird anschließend vom Mobilfunkgerät eine Freigabemeldung an den Palmtop gegeben. Voraussetzung hierzu ist, dass bei dem Palmtop zumindest die Infrarotschnittstelle vor einer Freigabe des Gerätes betriebsbereit ist. Dies ist aber im Allgemeinen der Fall, da die Passwortabfrage erst nach einem Einschalten des Gerätes erfolgt, wobei die Übertragungsschnittstelle schon aktiviert ist.

Wie schon ausgeführt, kann die Freigabe durch die Eingabe eines Nummerncodes erfolgen. Zur Erhöhung der Sicherheit kann vorgesehen sein, dass beide Geräte den jeweils im Gerät gespeicherten Benutzer abfragen. Bei einer korrekten Passworteingabe an einem Gerät, beispielsweise dem Mobilfunkgerät, wird bei dem erfindungsgemäßen Verfahren automatisch das zweite Gerät, oder auch weitere Geräte, wie hier der Palmtop, freigeschaltet. Dadurch entfällt für den Benutzer das umständliche und zeitaufwendige Eintippen und auch das Merken zweier Passwörter.

Bei einer Ausgestaltung der Erfindung werden bei der Übertragung der Freigabemeldung die bei der Freigabeaktion gewonnen Daten übertragen. Hierdurch kann dann das weitere Gerät, wie hier der Palmtop, selbständig nochmals eine Überprüfung vornehmen.

Insbesondere bei den im Rahmen von Bluetooth vorgesehenen Pikonetzen kann auch eine Abfrage von einem Gerät erfolgen, welches in die Reichweite der Geräte kommt, die das Pikonetz bilden. Hierbei ist dann keine explizite Handlung mehr des Benutzers notwendig, da die Freigabe des hinzukommenden Gerätes automatisch erfolgt. Aus der rechtmäßigen Benutzung der vorhandenen Geräte wird, beispielsweise einen gemeinsamen Eigentümer beziehungsweise Benutzer vorausgesetzt, auch die Benutzung des hinzukommenden Gerätes ermöglicht.

Für die Durchführung des erfindungsgemäßen Verfahrens ist ein eingeschaltetes weiters Gerät notwendig, an das über eine aktive Schnittstelle die Freigabemeldung gesendet werden kann. Es ist weiter denkbar, vom Erstgerät, dem Handy, ausgehend das beziehungsweise die weiteren Geräte automatisch einzuschalten und damit die Übertragung an die Schnittstelle einzuleiten.

## Patentansprüche

1. Verfahren zur Freigabe von Endgeräten der Datenverarbeitungstechnik und/oder der Kommunikationstechnik, die miteinander in Verbindung treten können,
bei dem an einem Endgerät eine Freigabeaktion durchgeführt wird, und
bei dem danach an mindestens ein weiteres Endgeräte eine Freigabemeldung gegeben wird.

2. Verfahren nach Anspruch 1,
bei dem die Freigabemeldung die bei der Freigabeaktion gewonnen Daten enthält.

3. Verfahren nach Anspruch 1 oder 2,
bei dem automatisch eine Abfrage einer Freigabemeldung von einem der weiteren Endgeräte ausgeführt wird.
